# EUROPÄISCHE PATENTSCHRIFT

(11) **EP 0 443 377 B1**
(45) Veröffentlichungstag und Bekanntmachung des Hinweises auf die Patenterteilung: **12.06.1996**
(21) Anmeldenummer: 91101721.8
(22) Anmeldetag: 08.02.1991
(51) Int. Cl.: G06F 11/00, G06F 11/10

(54) **Einrichtung zur signaltechnisch sicheren Darstellung eines Meldebildes**
Arrangement for the fail-safe displaying, in a reliable manner as regards to signalling techniques, of a signalling picture
Arrangement pour l'affichage de manière fiable sur le plan de la technique de signalisation d'une image de signalisation

(30) Priorität: 21.02.1990 DE 4005393
(43) Veröffentlichungstag der Anmeldung: 28.08.1991
(73) Patentinhaber: Alcatel SEL Aktiengesellschaft, D-70435 Stuttgart (DE)
(72) Erfinder: Pierick, Klaus, W-3300 Braunschweig (DE); Wiegand, Klaus, W-3300 Braunschweig (DE); Sammet, Fritz, W-7016 Gerlingen (DE); Petersen, Kay, W-7012 Fellbach (DE)
(74) Vertreter: Pechhold, Eberhard, Dipl.-Phys.

(56) Entgegenhaltungen:
- DE-A- 3 324 313
- DE-A- 3 411 015
- DE-A- 3 810 500
- GB-A- 2 215 955
- PATENT ABSTRACTS OF JAPAN vol. 013, no. 284 (P-892)29. Juni 1989

## Beschreibung

Die Erfindung betrifft eine Einrichtung gemäß dem Oberbegriff des Patentanspruches 1. Eine derartige Einrichtung ist in der DE 34 11 015 A1 beschrieben.

Bei der bekannten Einrichtung wird die Sicherheit der Bildschirmdarstellung dadurch erreicht, daß aus dem dem Bildschirm zugeführten seriellen Datenstrom in einem rückgekoppelten Schieberegister ein Prüfcode gewonnen und dieser mit einem vorab ermittelten und gespeicherten, dem jeweiligen Meldebild zugeordneten Vergleichscode verglichen wird. Um den Speicherplatz zur Speicherung des Vergleichscodes für die vielen möglichen Meldebildvariationen zu reduzieren, wird bei der bekannten Einrichtung der Vergleichscode aus einem Grundcode für ein die statischen Bildelemente enthaltendes Meldebild und Änderungscodes für die einzelnen möglichen Änderungen des Meldebildes zusammengesetzt.

Werden hochauflösende Bildschirme verwendet, deren Bildwiederholspeicher bildpunktweise angesteuert und ausgelesen werden, so wird die zu übertragende Datenmenge und damit die zur seriellen Übertragung der Daten erforderliche Frequenz so hoch, daß eine Datenreduktion mittels rückgekoppeltem Schieberegister zur Bildung des Prüfcodes problematisch wird.

Der Erfindung liegt deshalb die Aufgabe zugrunde, eine Einrichtung zur signaltechnisch sicheren Meldebilddarstellung der eingangs beschriebenen Art zu schaffen, die zusammen mit einem hochauflösenden Bildschirm verwendet werden kann.

Diese Aufgabe wird durch die im kennzeichnenden Teil des Patentanspruchs 1 angegebenen Merkmale gelöst.

Die Verwendung eines zweiten Bildwiederholspeichers, dessen Inhalt nicht auf dem Bildschirm wiedergegeben wird, erlaubt es, die fehlerfreie Funktion der Bildschirmansteuereinheit bei der Umsetzung aller möglicher Codeworte des Steuerrechners in die jeweils zugeordneten Bildelemente zu prüfen.

Da hier nicht der schnelle, zum Bildschirm hin gerichtete serielle Datenstrom ausgewertet wird, sondern ein längere Zeit unveränderlicher Speicherinhalt, gibt es keine Zeitprobleme bei der Bildung des Prüfcodes und beim anschließenden Vergleichsvorgang.

Ein Umstand, der bei Verwendung von Bildwiederholspeichern, die nicht bildpunktweise angesteuert werden, ein Sicherheitsrisiko darstellen würde, ist, daß der für die Bildschirmdarstellung notwendige, verwendete Bildwiederholspeicher selbst nicht geprüft wird. Dieser Umstand stellt jedoch bei Verwendung von Speichern mit einzeln ansteuerbaren, jeweils einem einzelnen Bildpunkt zugeordneten Speicherzellen kein Sicherheitsrisiko dar, da ein oder mehrere einzelne Bildpunkte, die aufgrund von Bauelementausfällen nicht oder in einer falschen Farbe angesteuert werden, den optischen Eindruck eines z.B. aus vielen hundert Bildpunkten bestehenden Bildelementes nicht so stark verändern können, daß das Bildelement nicht mehr erkennbar ist oder mit einem anderen Bildelement verwechselt wird. Ein Ausfall des gesamten Bildwiederholspeichers, z.B. wegen eines Fehlers in dessen Stromversorgung, führt zum Ausfall des gesamten Meldebildes und wird so in jedem Falle bemerkt.

Ausgestaltungen der Einrichtung nach der Erfindung sind in den Unteransprüchen angegeben. So nutzt der Gegenstand des Patentanspruches 2 die Tatsache aus, daß handelsübliche, mit hochauflösenden Farbbildschirmen ausgestattete Datensichtgeräte quadratische, aus gleichvielen Zeilen wie Spalten aufgebaute Speicher verwenden, deren Speicherplatz wegen des rechteckigen Aufbaus der Bildschirme zum Teil ungenutzt bleibt, d.h. dort gespeicherte Information nicht auf dem Bildschirm erscheint. Die zu prüfenden Bilddaten können damit einer Koordinatenverschiebung unterworfen und verdeckt, ohne auf dem Bildschirm zu erscheinen, im sonst ungenutzten Bereich des Bildwiederholspeichers abgelegt werden. Ein besonderer zweiter Speicher wird damit eingespart.

Der Gegenstand des Patentanspruchs 3 ermöglicht, zusätzlich zur Prüfung der Bilddaten der auf dem Bildschirm dargestellten Bildelemente, die Prüfung der Bilddaten solcher Bildelemente, die nicht gleichzeitig auf dem Bildschirm erscheinen. Damit wird ein Problem gelöst, das für die Verfügbarkeit der erfindungsgemäßen Einrichtung von großer Bedeutung ist:

Werden nämlich nur Bilddaten geprüft, die gleichzeitig auf dem Bildschirm wiedergegeben werden, so werden auch immer nur diejenigen Bauelemente oder Programmteile der Bildschirmansteuereinheit auf einwandfreie Funktion geprüft, die zu der vom Steuerrechner jeweils angeforderten Bilddarstellung gebraucht werden. Nicht gebrauchte Schaltungs- oder Programmteile werden nicht geprüft. Dies bedingt, daß ein Fehler immer erst dann erkannt wird, wenn ein angefordertes Bild entweder überhaupt nicht oder nur ohne signaltechnische Sicherheit dargestellt werden kann, sich der Fehler somit bereits betriebseinschränkend auswirkt.

Bei selten angeforderten Bildelementen kann die Zeit bis zur Offenbarung eines Fehlers dann auch so lang werden, daß die Wahrscheinlichkeit für das Auftreten eines gefährlichen Doppelfehlers nicht mehr vernachlässigbar gering ist und deshalb das entsprechende Bildelement außerhalb des normalen Betriebes, im Rahmen einer in regelmäßigen Zeitabständen durchzuführenden Prüfroutine aufgerufen werden muß.

Der Gegenstand des Patentanspruchs 3 erübrigt solche Sondermaßnahmen.

Anspruch 4 sieht die Verwendung des Steuerrechners als Vergleichsschaltung vor und ermöglicht so die Einsparung einer besonderen Vergleichsschaltung.

Anhand einer Figur soll nun ein Ausführungsbeispiel der Einrichtung nach der Erfindung ausführlich beschrieben und daran die Wirkungsweise der Einrichtung erklärt werden.

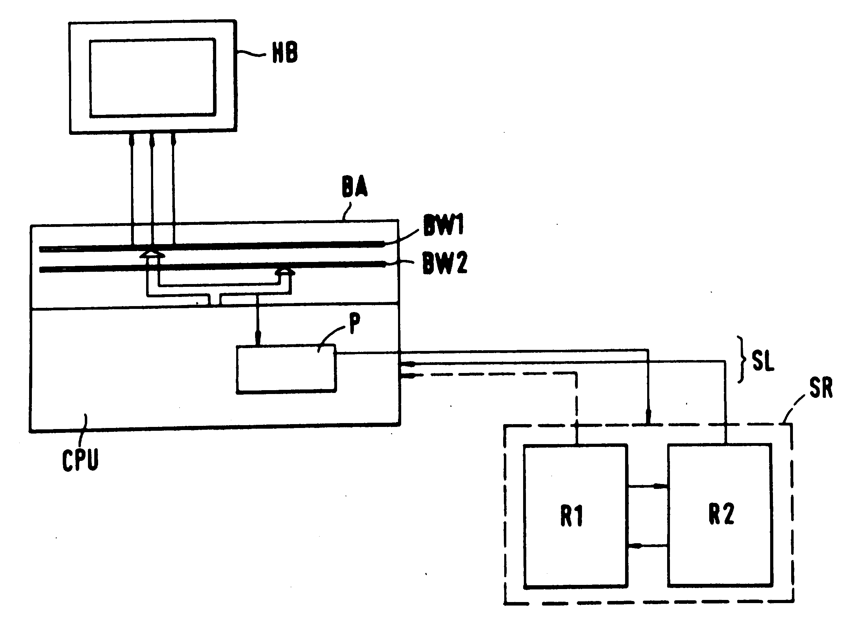

Die Figur zeigt ein Blockschaltbild mit einem hochauflösenden Bildschirm HB, der von einer Bildschirmansteuereinheit BA bildpunktweise angesteuert wird. In einem ersten Bildwiederholspeicher BW1 ist jedem Bildpunkt des Bildschirms für jede Grundfarbe eine Speicherzelle zugeordnet, deren Zustand über einen mit sehr hoher Frequenz arbeitenden seriellen Bus auf das Abbildungssystem des Bildschirms übertragen wird. Jede Speicherzelle des Bildwiederholspeichers wird von einem in der Bildschirmansteuereinheit oder in der Baugruppe des Bildwiederholspeichers selbst enthaltenen Rechner CPU über einen parallelen Bus einzeln unabhängig angesteuert. Der Rechner erzeugt die jeweils darzustellende Bildpunktkombination abhängig von einem Codewort, das er über eine signaltechnisch sicher, z.B. zweikanalig, betriebene Steuerleitung SL von einem sicheren Steuerrechner SR, der hier aus parallelarbeitenden Einzelrechnern R1, R2 besteht, die ihre Ergebnisse miteinander vergleichen, mitgeteilt bekommt.

Abhängig von dem jeweils anliegenden Codewort entnimmt der Rechner der Bildschirmansteuereinheit die dem Codewort zugeordnete Information einem Festwertspeicher oder führt bestimmte Programmschritte aus, die zur z.B. vektorgraphischen Erstellung der zu dem durch das Codewort bestimmten Bildelement gehörenden Bilddaten führen.

Parallel zur Einspeicherung dieser Bilddaten in den ersten Bildwiederholspeicher BW1 erfolgt deren Einspeicherung in einen zweiten Bildwiederholspeicher BW2, dem kein Bildschirm nachgeschaltet ist. Dort bleiben sie gespeichert solange das zugehörige Bildelement auf dem Bildschirm sichtbar ist. Während der Zeit, in der der erste Bildwiederholspeicher vom Bildschirm wiederholt ausgelesen wird, werden die im zweiten Bildwiederholspeicher abgelegten Bilddaten in den Rechner CPU zurückgelesen und zur Erstellung eines charakteristischen Prüfcodes einem Prüfcodegenerator P zugeführt. Dieser kann, wie beim Stand der Technik, ein rückgekoppeltes Schieberegister enthalten, er kann aber auch als Unterprogramm des in der Bildschirmansteuereinheit enthaltenen Rechners CPU realisiert sein.

Der Prüfcode wird über die Steuerleitung SL an den Steuerrechner SR übertragen und von diesem mit einem Soll-Prüfcode verglichen, welcher zu jedem an die Bildschirmansteuereinheit ausgegebenen Codewort in einem nicht dargestellten Speicher des Steuerrechners abgelegt ist.

Anstelle einer Abspeicherung von Bilddaten in einem zweiten Bildwiederholspeicher kann auch eine Abspeicherung der Bilddaten in einem zur Bildschirmdarstellung nicht genutzten Teil des ersten Bildwiederholspeichers erfolgen. Der zweite Bildwiederholspeicher BW2 kann dann entfallen. Sollen von der Bildschirmansteuereinheit mehrere Bildschirme mit Bilddaten versorgt werden, so können weitere Bildwiederholspeicher vorgesehen werden. Ein Bildwiederholspeicher kann dann gemeinsam als zweiter Bildwiederholspeicher genutzt werden.

Wird der Rechner des Bildschirmansteuergerätes so programmiert, daß er in der Lage ist, den zweiten Bildwiederholspeicher BW2 unabhängig von dem den Bildschirm versorgenden ersten Bildwiederholspeicher BW1 mit Bilddaten zu belegen, so kann zusätzlich die Erarbeitung solcher Bilddaten geprüft werden, die zu einem Bildelement gehören, das zu dieser Zeit nicht auf dem Bildschirm erscheinen darf. So kann z.B. die Erarbeitung sehr selten darzustellender Bildelemente wie z.B. des Symbols für eine Weichenauffahrmeldung in einer Eisenbahnsignalanlage ohne Betriebsunterbrechung geprüft werden. Die nur für Prüfzwecke erarbeiteten Bilddaten werden dann erstellt, wenn das vom Steuerrechner ausgegebene Codewort ein besonderes Prüfkennzeichen enthält. Die aufgrund eines solchen gekennzeichneten Codewortes erarbeiteten Bilddaten werden ebenfalls als Prüfbilddaten gekennzeichnet und können aufgrund dieser Kennzeichnung nur in den zweiten Bildwiederholspeicher eingegeben werden, so daß eine versehentliche Darstellung dieser Prüfbilddaten auf dem Bildschirm ausgeschlossen ist.

## Patentansprüche

1. Einrichtung zur signaltechnisch sicheren Darstellung eines aus mehreren vorab festgelegten Bildelementen bestehenden Meldebildes auf einem Bildschirm, (HB) mit einem signaltechisch sicheren Steuerrechner (SR), der einzelnen Bildelementen zugeordnete Codeworte an eine Bildschirmansteuereinheit (BA) ausgibt, welche die Codeworte in vom Bildschirm verarbeitbare Bilddaten umsetzt und in einem dem Bildschirm vorgeschalteten Bildwiederholspeicher (BW1) ablegt und mit einem Prüfcodegenerator (P), aus den von der Bildschirmansteuereinheit (BA) ausgegebenen Bilddaten einen Prüfcode erzeugt und diesen einer Vergleichsschaltung zuführt, welche den Prüfcode mit einem in einem Vergleichscodespeicher bereitgehaltenen, dem vom Steuerrechner ausgegebenen Codewort zugehörigen Sollprüfcode als Vergleichscode vergleicht und eine Fehleranzeige veranlaßt, wenn Prüfcode und Vergleichscode nicht übereinstimmen,
**dadurch gekennzeichnet**, daß als Bildwiederholspeicher (BW1) ein Speicher mit einzeln ansteuerbaren Bildpunktspeicherzellen verwendet wird, daß ein gleichartiger zweiter Speicher (BW2) ohne nachgeschalteten Bildschirm vorgesehen ist, dem die von der Bildschirmansteuereinheit (BA) erarbeiteten Bilddaten parallel zugeführt werden, daß die Bildschirmansteuereinheit (BA) die im zweiten Speicher eingespeicherten Daten nach ihrer Eingabe wieder ausliest und dem Prüfcodegenerator (P) zur Erzeugung des Prüfcodes zuführt.

2. Einrichtung nach Anspruch 1, dadurch gekennzeichnet, daß als zweiter Speicher (BW2) ein zur Bildschirmdarstellung nicht benötigter Teil des Bildwiederholspeichers (BW1) verwendet wird.

3. Einrichtung nach Anspruch 1 oder Anspruch 2, dadurch gekennzeichnet, daß der zweite Speicher (BW2) unabhängig vom Bildwiederholspeicher (BW1) bzw. dem zur Bildschirmdarstellung benötigten Teil des Bildwiederholspeichers mit Bilddaten belegt werden kann.

4. Einrichtung nach einem der vorstehenden Ansprüche, dadurch gekennzeichnet, daß als Vergleichsschaltung der Steuerrechner (SR) verwendet wird und daß der Prüfcode dem Steuerrechner zu diesem Zweck signaltechnisch sicher zugeführt wird.

## Claims

1. Apparatus for the fail-safe display of an indicating diagram consisting of a plurality of predetermined picture elements on a screen (HB), comprising a fail-safe control computer (SR) which outputs code words assigned to individual picture elements to a screen controller (BA) which converts the code words into picture data capable of being displayed on the screen and stores them in a refresh memory (BW1) preceding the screen, and a check-code generator (P) which derives a check code from the picture data outputted by the screen controller (BA) and feeds said check code to a comparator which compares it with a reference check code outputted by the control computer and stored in a reference-code memory, and initiates an error indication if the check code does not match the reference check code,
**characterized in** that the refresh memory (BW1) is a memory having individually selectable dot cells, that a second, like memory (BW2) is provided which is not followed by a screen and to which the picture data created by the screen controller (BA) are fed in parallel, and that the screen controller (BA) reads said picture data out of the second memory and feeds it to the check-code generator (P) for generating the check code.

2. Apparatus as claimed in claim 1, characterized in that the second memory (BW2) is a portion of the refresh memory (BW1) which is not needed for the screen display.

3. Apparatus as claimed in claim 1 or 2, characterized in that the second memory (BW2) can be loaded with picture data independently of the refresh memory (BW1) or the portion of the refresh memory which is not needed for the screen display.

4. Apparatus as claimed in any one of the preceding claims, characterized in that the function of the comparator is performed by the control computer (SR), and that to this end, the check code is fed to the control computer in a fail-safe manner.

## Revendications

1. Dispositif pour l'affichage de manière fiable sur le plan de la technique de signalisation d'une image de signalisation composée de plusieurs éléments d'image définis au préalable, sur un écran (HB) comportant un calculateur de commande (SR) fiable sur le plan de la technique de signalisation qui émet des mots de codes associés aux différents éléments d'image sur une unité de commande d'affichage (BA) qui convertit les mots de code en données d'image pouvant être traitées par l'écran, et les enregistre dans une mémoire de régénération (BW1) placée en amont de l'écran, et comportant un générateur de codes de contrôle (P) qui crée un code de contrôle à partir des données d'image sorties par l'unité de commande d'affichage (BA) et conduit ce code à un circuit comparateur, lequel compare ce code de contrôle à un code de contrôle de consigne associé au mot de code sorti par le calculateur de commande gardé dans une mémoire de codes de comparaison, en tant que code de référence, et déclenche un message d'erreur lorsque le code de contrôle et le code de référence ne coïncident pas,
caractérisé en ce qu'une mémoire comportant des cellules de mémoire de points d'image pouvant être sélectionnées est utilisée comme mémoire de régénération (BW1), en ce qu'une deuxième mémoire (BW2) du même type est prévue sans écran placé en aval et qu'à cette mémoire sont conduites en parallèle les données d'image traitées par l'unité de commande d'affichage (BA), en ce que l'unité de commande d'affichage (BA) lit à nouveau les données stockées dans la deuxième mémoire après leur entrée, et les conduit au générateur de codes de contrôle (P) pour produire un code de contrôle.

2. Dispositif suivant la revendication 1, caractérisé en ce qu'une partie de la mémoire de régénération (BW1) non utilisée pour la visualisation sur écran est utilisée comme deuxième mémoire (BW2).

3. Dispositif suivant la revendication 1 ou la revendication 2, caractérisé en ce que la deuxième mémoire (BW2) peut être chargée de données d'image indépendamment de la mémoire de régénération (BW1) ou de la partie de la mémoire de régénération nécessaire à la visualisation sur écran.

4. Dispositif suivant l'une des revendications précédentes, caractérisé en ce que le calculateur de commande (SR) est utilisé comme circuit comparateur et en ce que le code de contrôle est conduit dans ce but au calculateur de commande, de manière fiable sur le plan de la technique de signalisation.
